# EUROPEAN PATENT SPECIFICATION

(11) **EP 2 910 535 B1**
(45) Date of publication and mention of the grant of the patent: **03.04.2019**
(21) Application number: 15155889.7
(22) Date of filing: 20.02.2015
(51) Int. Cl.: C04B 28/04, C04B 28/14, C09D 1/08

(54) **A COMPOSITION USING EXPANDED PERLITE**
ZUSAMMENSETZUNG ZUR VERWENDUNG VON EXPANDIERTEM PERLIT
COMPOSITION D'UTILISATION DE PERLITE EXPANSÉE

(30) Priority: 24.02.2014 IL 23113514
(43) Date of publication of application: 26.08.2015
(60) Divisional application: 19153473.4
(73) Proprietor: Shahal Building Materials Ltd., 8310102 Beer Tovia (IL)
(72) Inventor: Bar Moav, David, 7550508 Rishon Letzion (IL)
(74) Representative: Lecomte & Partners

(56) References cited:
- EP-A1- 0 839 774
- WO-A2-2010/059817
- DE-A1- 19 540 273
- GB-A- 1 225 755
- DATABASE WPI Week 200901 Thomson Scientific, London, GB; AN 2009-A02162 XP002741888, & CN 101 279 833 A (QIUSHI HUBEI PAINT CO LTD) 8 October 2008 (2008-10-08)
- DATABASE WPI Week 201109 Thomson Scientific, London, GB; AN 2010-P52000 XP002741889, & CN 101 857 410 A (WUHAN WEIERBO SCI&TECHNOLOGY DEV CO LTD) 13 October 2010 (2010-10-13)

## Description

### Technical Field

The present invention relates to the use of compositions containing expanded perlite. More particularly, the present invention relates to the use of compositions of expanded perlite for the construction industry.

### Background

Volcanic glass, such as perlite, forms when molten rock, i.e. lava, pours out of a volcano and cools rapidly, therefore, there is no time for crystals to form or for water to escape. Instead, the lava hardens immediately, into a material which contains 2-5% water.

Perlite is known in industry in two forms: crude and expanded. Crude perlite is prepared by the crushing and screening of perlite into various size fractions. Expanded perlite is perlite after it has been heated. When heated, it can expand to as much as twenty times its original volume. This expansion is the result of heated water: when the glassy lava rock is heated to 890° C, the water molecules trapped in the rock turn into vapor which causes the rock to expand, similarly as the water in popcorn cause the kernel to pop when it is heated. It is the presence of these trapped water molecules which accounts for the physical properties of expanded perlite.

Expanded perlite can be manufactured to weigh between 32-240 kg/m³, making it adaptable for numerous applications in the construction, industrial, chemical, horticultural and petrochemical industries.

US 7,736,574 discloses a method for the production of perlite products such as sheets, panels or bricks. The disclosed method involves first providing a quantity of expanded perlite and treating the perlite by applying a cement binder thereto, so as to at least partially encapsulate the perlite with binder. Thereafter, an amount of cement is added to the binder-treated perlite and a mixture is created. The described mixture is then formed and allowed to harden to yield solid articles. Nevertheless, the disclosed method is used for yielding perlite based solid articles.

GB 1 225 755 discloses a cement-based adhesive composition to be mixed with water for use in fixing ceramic tiles and mosaics which comprises 20 to 90% by weight of cement, 1 to 50% by weight of a lightweight aggregate, 1 to 50% by weight of a filler, up to 10% by weight of a synthetic resin, and up to 5% by weight of an alkyl cellulose, hydroxyalkyl cellulose or alkyl hyroxyalkyl cellulose.

EP 0 839 774 A1 discloses light brickwork mortar of at least class LM 21, especially in the form of a works fresh mortar product or a works dry mortar product which can be pumped after water addition, which contains 30-75 wt.% hydraulic binder in the form of cement, 5-15 wt.% hydraulic or latent hydraulic binder component, 5-60 wt.% light aggregate in the form of round expanded clay granules, 4-20 wt.% light aggregate in the form of foamed glass granules, 0.01-0.5 wt.% cellulose ether and 0.001-1.0 wt.% air pore-former.

It would therefore be desired to propose a system void of these deficiencies.

### Summary

It is an object of the present invention to provide a light weight composition for use in the construction industry.

It is another object of the present invention to provide a light weight adhesive, for attaching any natural or synthetic stone veneer.

It is still another object of the present invention to provide an ecological adhesive for gluing stone tiles, which has a long open time.

It is still another object of the present invention to provide an adhesive or plaster which has improved thermal and acoustic insulating properties.

Other objects and advantages of the invention will become apparent as the description proceeds. The invention relates to the following items.
1. The present invention relates to a sand-free powder adhesive composition comprising: cement; a dispersible polymer powder; and expanded perlite, wherein at least 30% volume of the sand-free powder adhesive is expanded perlite; characterized in that said cement is at a ratio of between 800-950% of the mass of said expanded perlite.
2. The composition according to item 1, wherein said expanded perlite has a density of between 50-115 kg/m³, and a granular size of between 0-2 mm.
3. The composition according to item 1, wherein said dispersible polymer powder is at a ratio of between 5-300% of the mass of said expanded perlite.
4. The composition according to item 1, further comprising a cellulose ethers compound.
5. The composition according to item 1, further comprising a fiber compound.
6. The composition according to item 1, wherein the cement is white cement.
7. The composition according to item 1, wherein the cement is Portland cement.
8. The composition according to item 1, further comprising an accelerator.
9. The composition according to item 5, wherein the fiber compound is a polypropylene compound.
10. The composition according to item 1, wherein the perlite comprises at least 1% of the total mass of the adhesive composition.

### Detailed Description

Prior art stone veneer powder adhesives, such as Sika Ceram-202, manufactured by Sika AG of Switzerland, or Mr. Fix 116 manufactured by Carmit Mr. Fix Ltd., for gluing ceramic tiles, typically has a density of more than 1400 kg/m³. The heavy weight of these prior art adhesives is due, inter alia, to the weight of the sand in the adhesive. The heavy weight of these prior art adhesives is costly in terms of transportation and problematic in terms of handling, e.g. manual carrying. Furthermore, if the sand is not dried properly, before it is mixed into the adhesive, some of the adhesive's polymers can be ruined, effectively weakening the adhesive.

In a first embodiment, a composition is proposed, for use in the construction industry, which uses expanded perlite. Unlike conventional adhesive compositions having sand as aggregate; in this embodiment the volume of sand is substituted with an equal or equivalent volume of expanded perlite. The composition, which comprises expanded perlite, may be used for creating an adhesive, plaster, or any kind of material that hardens on drying and may be used for indoors and/or outdoors gluing on and/or coating walls, ceilings, floors, or for any other construction use. For example, the composition may be used as a powder adhesive, when mixed with water it can be used for gluing natural or synthetic stone tiles to a wall. Thus, for example, a powder adhesive composition for a stone veneer, which uses expanded perlite instead of sand, may have a density of approximately 500 kg/m³, which results in a lighter weight, for the same volume, compared to a typical prior art powder adhesive that may have a density of more than 1400 kg/m³. The advantages of using expanded perlite instead of sand in powder adhesives or plaster in terms of improving the thermal and/or acoustic insulation properties of the adhesive and/or plaster due to the expanded perlite's improved thermal and/or acoustic insulation properties are discussed further in relations to Table 1. The composition, which comprises expanded perlite, may have different consistencies such as powder, granular, cream, etc. The composition, which comprises expanded perlite, may be stored in sacks, bags, buckets, or any other known container. In one example, the expanded perlite may comprise at least 70% of the total volume of the composition. In another example, the expanded perlite may comprise at least 80% of the total volume of the composition. In yet another example, the expanded perlite may comprise at least 90% of the total volume of the composition. In the invention, the expanded perlite comprises at least 30% of the total volume of the composition.

In another embodiment of the invention, a powder, light weight, stone veneer adhesive has expanded perlite in at least 70 volume percent of adhesive; cellulose ether compounds at a ratio of between 7-15% of the mass of the expanded perlite; a dispersible polymer at a ratio of between 17%-180% of the mass of the expanded perlite; a fiber compound at a ratio of between 0.9-1.1% of the mass of the expanded perlite; an accelerator at a ratio of between 5-15% of the mass of the expanded perlite; and cement at a ratio of between 800%-950% of the mass of the expanded perlite. The components of the instant adhesive can be mixed together in any order to obtain the desired adhesion strength.

In a fourth embodiment, a powder, light weight, stone veneer adhesive has expanded perlite in at least 30 volume percent of adhesive; cellulose ether compounds at a ratio of between 30-40% of the mass of the expanded perlite; a dispersible polymer at a ratio of between 10-300% of the mass of the expanded perlite; a fiber compound at a ratio of between 0.6-0.9% of the mass of the expanded perlite; an accelerator at a ratio of between 5-15% of the mass of the expanded perlite; and cement at a ratio of between 800-950% of the mass of the expanded perlite. The components of the instant adhesive can be mixed together in any order to obtain the desired adhesion strength.

The described adhesive may be mixed with water for creating a glue having cream like texture, which hardens on drying. Due to the expanded perlite's intrinsic characteristics, water may be added to the powder adhesive composition in the mass ratio of approximately 0.9:1, for example, meaning, that approximately 0.9 liter of water may be added for each 1 kg of powder. In another example, water may be added to the powder adhesive composition in the mass ratio of approximately 0.8:1. In yet another example, water may be added to the powder adhesive composition in the mass ratio of approximately 0.7:1. In yet another example, water may be added to the powder adhesive composition in the mass ratio of approximately 0.6:1. In yet another example, water may be added to the powder adhesive composition in the mass ratio of approximately 1.2:1. Alternatively, water can be added to the powder adhesive composition in the ratio of between 60-120% of the mass of the powder adhesive composition. The ration of water added to the adhesive powder may also be a function of the specific ingredients of the adhesive powder. The adhesive, with cement, may be used for gluing any stone tiles as a protective and/or decorative covering for exterior or interior horizontal or vertical surfaces.

The composition, comprising expanded perlite, may be used for creating a lightweight powder veneer adhesive. The term veneer is meant to include any protective or ornamental facing which can be glued to any horizontal or vertical surface. The adhesive may be used for gluing stone such as granite porcelain, ceramic, mosaic, porcelain, marble, brick, or any other synthetic or natural stone to a wall, ceiling, floor or any other surface. The powder adhesive may be mixed with water for creating a glue having cream like texture, which hardens on drying. The glue may be used for gluing any stone tiles as a protective and/or decorative covering for exterior or interior horizontal or vertical surfaces. In one embodiment, the powder adhesive composition, for attaching stone veneer, comprises at least 9% of expanded perlite of its total mass. In another embodiment, the powder adhesive composition, for attaching stone veneer, comprises at least 1% of expanded perlite of its total mass. In yet another embodiment, the powder adhesive composition, for attaching stone veneer, may comprise at least 3% of expanded perlite of its total mass. In yet another embodiment, the powder adhesive composition, for attaching stone veneer, may comprise at least 6% of expanded perlite of its total mass.

In one embodiment the adhesive composition, for attaching veneer, may comprise, in addition to the expanded perlite, a cellulose ethers compound. Preferably, the cellulose ethers compound may be Mecellose® FMC 21010 manufactured by Samsung Chemical, which may be added to the adhesive composition at a ratio of between 7-15% of the mass of the expanded perlite, for example. In another example, the cellulose ethers compound may be added to the adhesive composition at a ratio of between 4%-24% of the mass of the expanded perlite. Alternatively, the cellulose ethers compound may be Methocel, which is water-soluble methylcellulose and has hydroxypropyl methylcellulose polymers, or any other cellulose ether that is made for use with cement. In one embodiment the cellulose ethers compound may be added to the adhesive composition at a ratio of between 30-40% of the mass of the expanded perlite. The cellulose ethers compound may be used to enhance some of the qualities of the adhesive composition such as providing workable quality to the composition and/or extending the open time of the composition, and/or improving the water saturation of the composition, where open time is the time after the adhesive is applied during which a serviceable bond can be made.

In the invention the adhesive composition for attaching veneer also comprises a dispersible polymer. The dispersible polymer may be Wacker's Vinnapas® 5025L, which is a leveling dispersible powder based on vinyl acetate and ethylene, or any other hydroscopic compound which is dispersible in water, such as SBR-based adhesives, vinyl acetate, acryl, etc. Preferably, the dispersible polymer may be added to the adhesive composition at a ratio of between 17%-180% of the mass of the expanded perlite. In another embodiment the dispersible polymer may be added to the adhesive composition at a ratio of between 200-250% of the mass of the expanded perlite. In yet another embodiment, the dispersible polymer may be added to the adhesive composition at a ratio of between 5-300% of the mass of the expanded perlite.

In one embodiment the adhesive composition for attaching veneer may also comprise a fiber compound such as Adfil construction fibres or any other polypropylene compound having a fiber Length of 6mm or any other chemical or synthetic fiber compound which may be used for cement based adhesives, or any other fiber that is used with cement such as nylon fiber. Preferably, the fiber compound may be added to the adhesive composition at a ratio of between 0.9-1.1% of the mass of the expanded perlite. Alternatively, the fiber compound may be added to the adhesive composition at a ratio of between 0.6-0.9% of the mass of the expanded perlite.

In the invention the adhesive composition for attaching veneer comprises cement such as white cement, Portland cement, or any type of cement or aluminous cement. The cement is added to the adhesive composition at a ratio of between 800-950% of the mass of the expanded perlite.

In one embodiment the composition for creating an adhesive for attaching veneer may also comprise an additive for accelerating the bonding time of the adhesive, referred to hereinafter as accelerator. The accelerator may be Calcium Formate, Calcium Chloride, or any other additive that can be used for accelerating the bonding time of the adhesive. In one embodiment, the accelerator may be added to the adhesive composition at a ratio of between 5-15% of the mass of the expanded perlite.

In one embodiment, the expanded perlite and all the other ingredients, mentioned above, of the proposed composition, may be mixed together in any order.

In one embodiment, the powder adhesive composition may be mixed with water to create glue for gluing any synthetic or natural stone tile to any surface. In one embodiment, due to the expanded perlite's intrinsic characteristics, water may be added to the powder adhesive composition in the mass ratio of approximately 0.7:1, meaning that approximately 0.7-1 liter of water can be added for each 1 kg of powder. In another embodiment, water may be added to the powder adhesive composition in the mass ratio of approximately 1:1. In one embodiment, water may be added to the powder adhesive composition in the ratio of between 70-100% of the mass of the powder adhesive composition.

In another embodiment, water may be added to the powder adhesive composition in the mass ratio of approximately 0.6:1, meaning that approximately 0.6 liter of water can be added for each 1 kg of powder. Alternatively, water may be added to the powder adhesive composition in the ratio of between 60-120% of the mass of the powder adhesive composition.

Preferably, the expanded perlite, used in the proposed adhesive composition, has a granular size of between 0-2 mm, where the preferred density of the expanded perlite is thus between 50-115 kg/m³. In another embodiment, the proposed adhesive composition comprises expanded perlite having a granular size of between 2-6 mm and having thus a density of between 40-50 kg/m³.

In one embodiment these may be the physical properties of the expanded perlite which may be used for creating a powder adhesive composition for attaching stone tiles:

**Table 1**

| | |
|---|---|
| Spatial weight | 40-115 kg/m³ |
| Color | White |
| Refractive Index | 1.4-1.5 |
| Granular Size | From fine powder to 6mm |
| pH | 7 - 8 |
| Softening Point | 890-1100°C |
| Fusion Point | 1280-1350°C |
| Specific Heat | 387 J/kg·K |
| Thermal Conductivity | 0.04 W/m·K |

In practice, the expanded perlite, used in the proposed composition, may be derived from different sources, and may have other physical properties.

The use of expanded perlite instead of sand in construction compositions may also benefit the environment as the perlite is a natural and ecological substance. The use of expanded perlite instead of sand in powder adhesives or plaster can also improve the thermal and/or acoustic insulation properties of the adhesive and/or plaster due to the expanded perlite's improved thermal and/or acoustic insulation properties.

### Examples

For the sake of enablement an example is set forth, for the third embodiment, with ingredients and their approximated amounts for creating a powder adhesive composition, which comprises expanded perlite, for attaching stone tiles:

**Table 2**

| | |
|---|---|
| Perlite | 850 g |
| White Cement | 7.38 Kg |
| Methocel | 100 g |
| Vinnapas® 5025L | 0.6 Kg |
| poly propylene | 10 g |

By mixing the exemplified ingredients and amounts, of table 2, it is possible to create a powder adhesive composition of about 9 kg. Water may be added to this powder adhesive composition before gluing the stone veneer. In this example at least 8 liters of water may be added to this composition for creating glue for gluing a stone veneer. In one embodiment, upon adding water to the adhesive composition the resulting glue may be used for gluing tiles to a surface after which the glue may be dried and the tiles may stay attached to the surface henceforth.

The mixing of the exemplified ingredients and amounts, of table 2 may create an adhesive which complies with the properties C2 TE S1 of any of the European standards: EN 1346 (2007), EN 1308 (2007), EN 1347 (2007), EN 1348 (2007), or EN 12002 (2008).

Lab tests of the above disclosed example powder adhesive composition reveal the following characteristics of the composition:

**Table 3**

| | |
|---|---|
| Density (wet) | 1000 kg/m³ |
| Preferred Water to powder relation | 0.9 liter water for 1 kg powder |
| Effective work time | 90 minutes |
| Open time | 30 minutes |
| Cover capability | 2.6 Kg/m² for 5mm thickness |
| adhesion strength after 28 days | 1.2 megapascal MPa |
| Working temperature | 5°C-35°C |

Thus, as shown in Table 3, the powder adhesive composition may weigh less than the typical prior art powder adhesive, which can reduce costs of transportation and handling. In addition, the use of expanded perlite instead of sand in powder adhesives may also prolong the open time of the adhesive, after the water is added, effectively making the perlite based adhesive more comfortable for use.

Lab tests of another example powder adhesive composition may reveal the following characteristics of the composition:

**Table 4**

| | |
|---|---|
| Density | 500 kg/m³ |
| Preferred Water to powder relation | 1 liter water for 1 kg powder |
| Effective work time | 90 minutes |
| Open time | 45 minutes |
| Cover capability | 2.6 Kg/m² for 5mm thickness |
| adhesion strength after 28 days | 1.5 megapascal MPa |
| Working temperature | 5°C-35°C |

In one embodiment, the described adhesives above may comply with any of the known adhesive properties such as: C1, C1 T, C1 TE, C1 TE S1, C1 TE S2, C2, C2 T, C2 TE, C2 TE S1, or C2 TE S2 of any of the European standards such as: EN 1346 (2007), EN 1308 (2007), EN 1347 (2007), EN 1348 (2007), or EN 12002 (2008).

## Claims

1. A sand-free powder adhesive composition comprising:
cement;
a dispersible polymer powder; and
expanded perlite, wherein at least 30% volume of the sand-free powder adhesive is expanded perlite;
**characterized in that**
said cement is at a ratio of between 800-950% of the mass of said expanded perlite.

2. The composition according to claim 1, wherein said expanded perlite has a density of between 50-115 kg/m³, and a granular size of between 0-2 mm.

3. The composition according to claim 1, wherein said dispersible polymer powder is at a ratio of between 5-300% of the mass of said expanded perlite.

4. The composition according to claim 1, further comprising a cellulose ethers compound.

5. The composition according to claim 1, further comprising a fiber compound.

6. The composition according to claim 1, wherein the cement is white cement.

7. The composition according to claim 1, wherein the cement is Portland cement.

8. The composition according to claim 1, further comprising an accelerator.

9. The composition according to claim 5, wherein the fiber compound is a polypropylene compound.

10. The composition according to claim 1, wherein the perlite comprises at least 1% of the total mass of the adhesive composition.

## Patentansprüche

1. Sandfreie Pulverkleberzusammensetzung, umfassend:
Zement;
ein dispergierbares Polymerpulver; und
expandiertes Perlit, wobei mindestens 30 Volumen-% des sandfreien Pulverklebers expandiertes Perlit ist,
**dadurch gekennzeichnet, dass**
der Zement in einem Verhältnis zwischen 800-950% der Masse des expandierten Perlits vorliegt.

2. Zusammensetzung nach Anspruch 1, wobei das expandierte Perlit eine Dichte zwischen 50-115 kg/m³ und eine Korngröße zwischen 0-2 mm aufweist.

3. Zusammensetzung nach Anspruch 1, wobei das dispergierbare Polymerpulver in einem Verhältnis zwischen 5-300% der Masse des expandierten Perlits vorliegt.

4. Zusammensetzung nach Anspruch 1, weiter eine Celluloseetherkomponente umfassend.

5. Zusammensetzung nach Anspruch 1, weiter eine Faserkomponente enthaltend.

6. Zusammensetzung nach Anspruch 1, wobei der Zement weißer Zement ist.

7. Zusammensetzung nach Anspruch 1, wobei der Zement Portlandzement ist.

8. Zusammensetzung nach Anspruch 1, weiter einen Beschleuniger umfassend.

9. Zusammensetzung nach Anspruch 5, wobei die Faserkomponente eine Polypropylenkomponente ist.

10. Zusammensetzung nach Anspruch 1, wobei das Perlit mindestens 1% der Gesamtmasse der Kleberzusammensetzung umfasst.

## Revendications

1. Composition adhésive pulvérulente qui ne contient pas de sable, comprenant :
du ciment ;
une poudre polymère apte à être dispersée ; et
de la perlite expansée, dans laquelle au moins 30 % en volume de l'adhésif pulvérulent qui ne contient pas de sable représente de la perlite expansée ;
**caractérisée en ce que**
ledit ciment est présent dans un rapport entre 800 et 950 % de la masse de ladite perlite expansée.

2. Composition selon la revendication 1, dans laquelle ladite perlite expansée possède une masse volumique entre 50 et 115 kg/m³, et une granulométrie entre 0 et 2 mm.

3. Composition selon la revendication 1, dans laquelle ladite poudre polymère apte à être dispersée est présente dans un rapport entre 5 et 300 % de la masse de ladite perlite expansée.

4. Composition selon la revendication 1, comprenant en outre un composé sous la forme d'éthers cellulosiques.

5. Composition selon la revendication 1, comprenant en outre un composé fibreux.

6. Composition selon la revendication 1, dans laquelle le ciment est du ciment blanc.

7. Composition selon la revendication 1, dans laquelle le ciment est du ciment Portland.

8. Composition selon la revendication 1, comprenant en outre un accélérateur.

9. Composition selon la revendication 5, dans laquelle le composé fibreux est un composé de polypropylène.

10. Composition selon la revendication 1, dans laquelle la perlite comprend au moins 1 % de la masse totale de la composition adhésive.
